# EUROPÄISCHE PATENTSCHRIFT

(11) **EP 1 714 129 B1**
(45) Veröffentlichungstag und Bekanntmachung des Hinweises auf die Patenterteilung: **14.04.2010**
(21) Anmeldenummer: 05701298.1
(22) Anmeldetag: 02.02.2005
(51) Int. Cl.: G01M 3/36, G01M 3/32

(54) **VERFAHREN UND VORRICHTUNG ZUM PR FEN VON GESCHLOSSENEN PACKU NGEN**
METHOD AND DEVICE FOR CONTROLLING CLOSED PACKAGES
PROCEDE ET DISPOSITIF POUR CONTROLER DES EMBALLAGES FERMES

(30) Priorität: 10.02.2004 DE 102004006633
(43) Veröffentlichungstag der Anmeldung: 25.10.2006
(73) Patentinhaber: Focke & Co. (GmbH & Co. KG), 27283 Verden (DE)
(72) Erfinder: ENGEL, Gisbert, 27306 Luttum (DE); PRAHM, Andreas, 26676 Barssel (DE)
(74) Vertreter: Bolte, Erich
(86) Internationale Anmeldenummer: PCT/EP2005/001004
(87) Internationale Veröffentlichungsnummer: WO 2005/078406

(56) Entgegenhaltungen:
- DE-A1- 3 616 472
- DE-A1- 3 725 739
- DE-A1- 3 936 163
- DE-A1- 10 001 300

## Beschreibung

Die Erfindung betrifft ein Verfahren zum Prüfen der Dichtigkeit von geschlossenen Hohlkörpern mit Luft gemäß dem Oberbegriff des Anspruch 1. Weiterhin betrifft die Erfindung eine entsprechende Vorrichtung zur Durchführung des Verfahrens gemäß dem Oberbegriff des Anspruchs 3.

Die Dichtigkeitsprüfungen von Packungen im Bereich der Lebens- und Genussmittelindustrie ist für die Gewährleistung der Haltbarkeit der verpackten Produkte von Bedeutung. Betroffen sind Packungen mit einem Gas- bzw. Luftanteil in der geschlossenen Verpackung. Vorrangige Beispiele sind Folienbeutel und BecherPackungen mit verformbarer Verschlussfolie.

Bekannt ist die Prüfung derartiger Packungen mittels Unterdruck. Die Packung wird zu diesem Zweck in einer Prüfvorrichtung mit Unterdruck beaufschlagt. Bei undichter Verschlussfolie entsteht eine Deckelwölbung, die als Kennzeichen für eine Undichtigkeit identifiziert wird (US 4 934 180).

Weiterhin bekannt ist aus der DE 37 25 739 A1 eine Vorrichtung zum kontinuierlichen Prüfen von Kunststoffbechern mittels Unterdruck. Dabei werden einzelne Becher oder Bechergruppen im Bereich einer Unterdruckglocke einem Unterdruck ausgesetzt. Weiterhin wird vorgeschlagen, dass die Unterdruckglocke zusammen mit den Bechern bewegt wird, also quasi "mitfahrend" ausgebildet ist. Weitere Prüfverfahren, die sich des Unterdruckverfahrens bedienen finden sich in DE 39 36 163 A1 und DE 100 01 300 A1.

Bei der Erfindung soll unter Einsatz von Unterdruck bzw. Vakuum eine verbesserte Prüfung von Hohlkörpern, insbesondere von dichten Packungen aller Art mit mindestens in einem Teilbereich verformbarer Umhüllung geschaffen werden.

Der Erfindung liegt die Aufgabe zugrunde, die Prüfung der Dichtigkeit von insbesondere Packungen dahingehend zu verbessern, dass eine erhöhte Prüfleistung erzielt und vorzugsweise das Prüfverfahren in den Produktionsprozess der Gegenstände bzw. Packungen integriert werden kann.

Zur Lösung dieser Aufgabe weist das erfindungsgemäße Verfahren die Merkmale des Anspruchs 1 auf. Es ist demnach vorgesehen, dass der als Plattenförderer ausgebildete Packungsförderer formstabile Platten aufweist, die eine durchgehende Plattenebene als Auflager für die Gegenstände und das Abdichtorgan, nämlich eine Abdeckhaube, bilden und wobei das Abdichtorgan zum Abdichten so auf dem Packungsförderer positioniert wird, dass quergerichtete Seitenwände und Querstege des Abdichtorgans im Bereich von Fugen zwischen den Platten auf dem Packungsförderer aufliegen zur Abdichtung der Fugen.

Eine Besonderheit der Erfindung besteht darin, dass eine ggf. größere Gruppe von Packungen gleichzeitig während des Transports auf einem Packungsförderer geprüft wird. Die Packungen sind in einer exakten, vorgegebenen Formation angeordnet, insbesondere in Längs- und Querreihen. Eine so aufgebaute Prüfgruppe wird in einer durch eine Saugglocke bzw. durch eine Abdeckhaube in Verbindung mit dem Packungsförderer gebildeten Prüfkammer überprüft. Jeder Packung ist vorzugsweise ein Sensor zugeordnet, insbesondere ein Lasersensor, der eine Prüfseite der Packung nach dem Triangularverfahren abtastet.

Bei der gleichzeitigen Prüfung von mehreren Packungen (Prüfgruppe) werden erfindungsgemäß fehlerhafte Packungen außerhalb der Prüfkammer ausgesondert und unter Aufrechterhaltung der Formation durch fehlerfreie Packungen ersetzt, so dass eine komplette Formation aus fehlerfreien Packungen weitertransportiert und insbesondere verpackt werden kann.

Eine erfindungsgemäße Vorrichtung weist die Merkmale des Anspruchs 3 auf. Es ist demnach vorgesehen, dass der Packungsförderer als Plattenförderer ausgebildet ist, mit formstabilen Platten, die eine durchgehende Plattenebene als Auflager für die Gegenstände und das Abdichtorgan, nämlich eine Abdeckhaube, bilden und wobei das Abdichtorgan so auf dem Packungsförderer positioniert ist, dass quergerichtete Seitenwände und Querstege des Abdichtorgans im Bereich von Fugen zwischen den Platten auf dem Packungsförderer aufliegen zur Abdichtung der Fugen.

Ein Ausführungsbeispiel einer erfindungsgemäßen Vorrichtung sowie alternative, nicht unter die Erfindung fallende Varianten, werden nachfolgend anhand der Zeichnungen erläutert. Es zeigt:
- Fig. 1: eine erfindungsgemäße Vorrichtung zur Prüfung der Dichtigkeit von (Becher-) Packungen in schematischer Seitenansicht,
- Fig. 2: eine Einzelheit II der Fig. 1 in vergrößertem Maßstab,
- Fig. 3: eine Draufsicht auf einen Teil der Vorrichtung gemäß Fig. 1 entsprechend Pfeil III in vergrößertem Maßstab,
- Fig. 4: ein nicht zur Erfindung gehörendes Ausführungsbeispiel einer Vorrichtung in Draufsicht bzw. im Horizontalschnitt,
- Fig. 5: die Vorrichtung gemäß Fig. 4 in einem Quer- bzw. Radialschnitt entsprechend der Schnittebene V-V in Fig. 4,

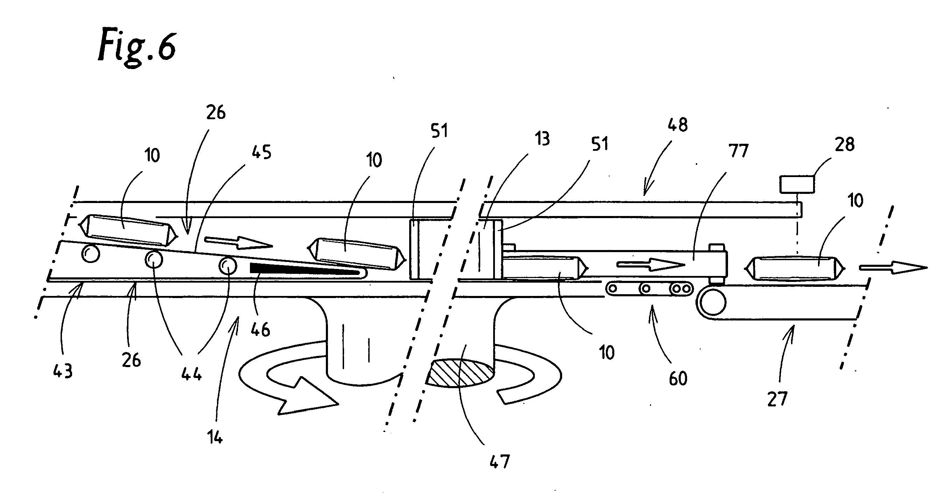

- Fig. 6: eine Seitenansicht der Vorrichtung gemäß Fig. 4 entsprechend den Pfeilen VI-VI,
- Fig. 7: ein weiteres nicht zur Erfindung gehörendes Ausführungsbeispiel einer Vorrichtung in Draufsicht bzw. im Horizontalschnitt,
- Fig. 8: eine Einzelheit der Vorrichtung gemäß Fig. 7 in radialer Schnittebene VIII-VIII der Fig. 7,
- Fig. 9: ein viertes nicht zur Erfindung gehörendes Ausführungsbeispiel einer Vorrichtung in Draufsicht bzw. im Horizontalschnitt,
- Fig. 10: die Vorrichtung gemäß Fig. 9 in einem Umfangsschnitt bzw. in Seitenansicht entsprechend Schnittebene X-X in Fig. 9.

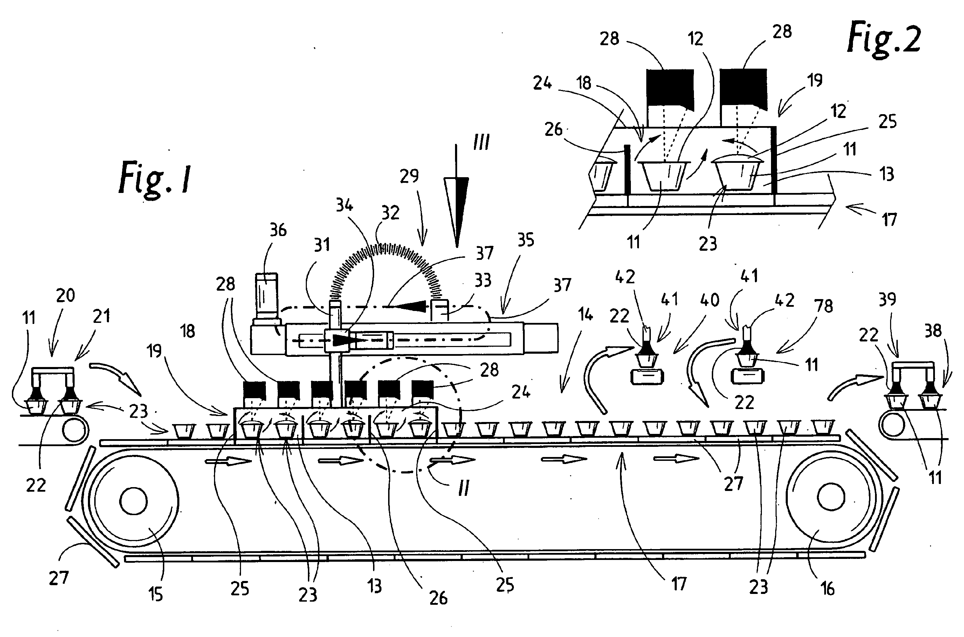

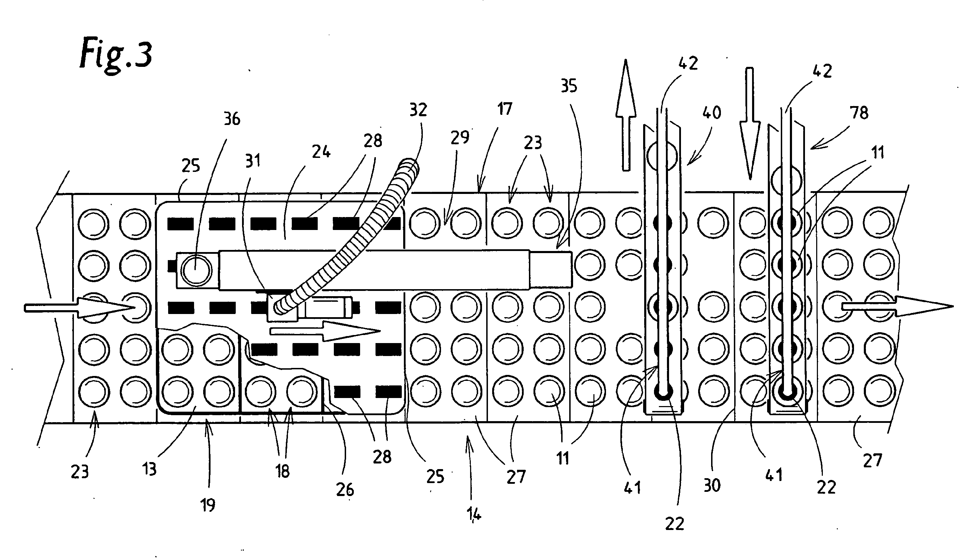

Die Vorrichtungen beziehen sich auf die Prüfung von Packungen 10, 11 mit mindestens einem leicht verformbaren Teilbereich aus Folie oder dergleichen. Das besondere Ausführungsbeispiel gemäß Fig. 1 bis Fig. 3 befasst sich mit der Prüfung von Bechern (11) mit einer oberen verformbaren Verschlussfolie 12. Alle Packungen sind dicht verschlossen und enthalten als Packungsinhalt neben dem Verpackungsgut einen Luft- oder Gasanteil.

Die Packungen 10, 11 werden während des Transports im Anschluss an die Fertigung auf Dichtigkeit überprüft, und zwar mittels Unterdruck. Zu diesem Zweck werden die Packungen 10, 11 während eines Förderabschnitts in einer geschlossenen weitgehend dichten Prüfkammer 13 transportiert, die mindestens zeitweilig mit Unterdruck beaufschlagt ist. Hierdurch ergibt sich eine Verformung der Packung, nämlich eine kissenartige Aufblähung bei einem Beutel 10 und eine nach außen gerichtete Wölbung einer Verschlussfolie 12 bei den Bechern 11. Diese Verformung wird abgetastet zur Erzeugung eines Fehlersignals und zur Aussonderung der als undicht erkannten Fehlpackung.

Eine Besonderheit besteht darin, dass der Unterdruck mit Hilfe von Förderorganen für die Packungen erzeugt wird. Bei dem Ausführungsbeispiel gemäß Fig. 1 bis Fig. 3 werden die Becher 11 durch einen Packungsförderer 14 transportiert, der als Endlosförderer ausgebildet ist und zwar als Plattenförderer. Der Packungsförderer 14 ist über Umlenkwalzen 15, 16 geführt.

Ein oberer Fördertrum 17 des Packungsförderers 14 bildet eine Prüfstrecke. In deren Bereich wird eine insbesondere große Anzahl von Packungen bzw. Bechern 11 während der kontinuierlichen Förderbewegung des Packungsförderers 14 geprüft. Eine ausgewählte Anzahl von Bechern 11 bildet eine Prüfgruppe 18, die während der Prüfung durch eine (gemeinsame) Abdeckhaube 19 zur Bildung der Prüfkammer 13 eingeschlossen ist.

Die Packungen bzw. Becher 11 werden durch einen Zuförderer 20 dem Packungsförderer 14 übergeben. Die auf einem Endlosförderer bzw. Gurt in geordneter Formation ankommenden Becher 11 werden durch einen Hubförderer 21 mit Saugköpfen 22 für je einen Becher 11 erfasst und durch entsprechende Bewegung des Hubförderers 21 auf dem Fördertrum 17 abgesetzt. Es ist vorgesehen, dass mit jedem Förderhub eine Teilgruppe der Becher 11 erfasst wird. Im vorliegenden Fall besteht diese aus zwei Querreihen 23 von ausgerichteten Bechern 11. Die gleichzeitig erfassten (zwei) Querreihen 23 bilden mit bereits vorhandenen Bechern 11 bzw. Querreihen 23 die Prüfgruppe 18. Diese besteht bei dem vorliegenden Beispiel aus sechs Querreihen 23, kann aber durchaus eine größere Anzahl von Bechern 11 umfassen. Jede Querreihe 23 weist in diesem Falle fünf nebeneinander liegende Becher 11 auf.

Die Prüfkammer 13 bzw. die Abdeckhaube 19 entspricht in den Abmessungen der in geordneter Formation ausgerichteten Prüfgruppe 18. Die Abdeckhaube 19 besteht aus einer quergerichteten bzw. horizontalen Oberwand 24 und ringsherum laufenden, aufrechten Seitenwänden 25. Diese sind dichtend auf dem Packungsförderer 14 bzw. dessen Obertrum 17 abgestützt, sodass ein insgesamt geschlosseiner Hohlraum als Prüfkammer 13 entsteht. Innerhalb der Abdeckhaube 19 können Querstege 26 angebracht sein. Diese erstrecken sich zwischen Querreihen 23 und liegen ebenfalls abdichtend auf dem Packungsförderer 14. Die Höhe der Querstege 26 ist geringer als die Gesamthöhe der Abdeckhaube 19, sodass ein zusammenhängender Innenraum entsteht.

Der Packungsförderer 14 ist so ausgebildet, dass eine formstabile, ebene Oberfläche mindestens im Bereich der Prüfstrecke gebildet ist. Dies wird durch einen Plattenförderer bzw. eine Plattenkette als Packungsförderer 14 erreicht. Auf einem endlosen Zugorgan sind formstabile Platten 27 angeordnet, die im Bereich des Fördertrums 17 eine durchgehende Plattenebene als Auflager für die Becher 11 und die Abdeckhaube 19 bilden. Die Abdeckhaube 19 ist so auf dem Fördertrum 17 positioniert, dass die quergerichteten Seitenwände 25 und die Querstege 26 im Bereich von Fugen 30 zwischen den Platten 27 auf dem Packungsförderer 14 aufliegen und somit die Fugen 30 abdichten.

Jeder Packung bzw. jedem Becher 11 ist im Bereich der Prüfkammer 13 bzw. der Abdeckhaube 19 ein Sensor 28 zur Prüfung des Bechers 11 zugeordnet. Die einer Prüfgruppe 18 entsprechende Anzahl von Sensoren 28 ist außerhalb der Prüfkammer 13 angeordnet, und zwar an der Oberwand 24 der Abdeckhaube 19, jeweils oberhalb des zu prüfenden Bechers 11, sodass dessen Verschlussfolie 12 abgetastet wird. Bei korrekt, also dicht, ausgebildetem Becher 11 ergibt sich eine Wölbung der Verschlussfolie 12. Bei undichtem Becher 11 bleibt die Verschlussfolie 12 in einer ebenen Form (Fig. 2). Diese Gestalt eine Teils der Packung, nämlich der Verschlussfolie 12, wird durch Prüfstrahlen der Sensoren 28 abgetastet, insbesondere durch Laserstrahlen. Diese werden nach dem Triangulationsprinzip ausgewertet. Eine fehlerhafte Packung bzw. ein fehlerhafter Becher 11 wird identifiziert und später ausgesondert. Die Oberwand 24 besteht insgesamt oder im Bereich der Sensoren (28) aus durchsichtigem Material (Acryl).

In der Prüfkammer bzw. in der Abdeckhaube 19 wird während der Prüfphase ein Unterdruck erzeugt. Die Abdeckhaube 19 bzw. deren Oberwand 24 weist ein aufrechtes Saugrohr 31 auf. Dieses ist über ein flexibles Anschlussstück, nämlich über einen Schlauch 30 mit einer feststehenden Unterdruckquelle 33 verbunden.

Die Abdeckhaube 19 ist durch einen Haubenförderer 29 bewegbar. Das starre Saugrohr 31 ist zugleich Tragorgan für die Abdeckhaube 19 und mit einem Schlitten 34 eines in Förderrichtung wirkenden, horizontalen Linearantriebs 35 verbunden. Bei diesem handelt es sich um eine Servoachse, insbesondere um eine drehend angetriebene Spindelwelle, auf der der Schlitten 34 wie eine Spindelmutter verschiebbar ist. Der Linearantrieb 35 bzw. die Spindel wird durch einen Servomotor 36 angetrieben, der exakte Bewegungen und Relativstellungen der Abdeckhaube 19 ermöglicht.

Die Abdeckhaube 19 ist auf- und abbewegbar, nämlich zwischen der gezeigten Prüfstellung und einer vom Packungsförderer 14 abgehobenen Stellung, in der sich die Abdeckhaube 19 oberhalb der Bewegungsbahn der Packungen bzw. Becher 11 befindet. In dieser angehobenen Stellung findet eine Rückkehrbewegung in die in Fig. 1 gezeigte Ausgangsstellung statt. Eine Hubeinrichtung für die Abdeckhaube 19, und zwar für das Saugrohr 31, ist im Bereich des Schlittens 34 angeordnet und besteht beispielsweise aus einer (aufrechten) Zahnstange mit Ritzel. Die Bewegungsbahn der Abdeckhaube 19 ist idealisiert als strichpunktierte Linie 37 in Fig. 1 gezeigt.

In der angehobenen Stellung der Abdeckhaube 19 verlassen die geprüften Becher 11 die Prüfstrecke (Linie 37). Die als fehlerhaft identifizierten Packungen 11 werden vom Packungsförderer 14 abgenommen. Im Bereich der in der Formation der Becher 11 entstehenden Lücke wird positionsgenau ein korrekt ausgebildeter Becher 11 abgesetzt. Dadurch ist es möglich, komplette, geordnete Formationen mit ausschließlich korrekten Bechern 11 einem Abförderer 38 zu übergeben. Diesem ist ein Hubförderer 39 zugeordnet, der in gleicher Weise ausgebildet ist wie der Hubförderer 21 im Bereich des Zuförderers 20. Der Hubförderer 39 übernimmt vom Packungsförderer 14 Teilgruppen, nämlich insbesondere jeweils zwei Querreihen 23 der Packungen und setzt diese auf dem als Gurt ausgebildeten Abförderer 38 ab.

Zur Entnahme von fehlerhaften Packungen bzw. Bechern 11 ist oberhalb des Packungsförderers 14 ein quergerichteter Förderer 40. Dieser besteht aus einem Gurtförderer und einem Hubförderer 41 mit Saugköpfen 22, die in einer der Formation der Becher 11 bzw. dem Abstand innerhalb einer Querreihe 23 entsprechenden Relativstellungen an einem gemeinsamen Tragarm 42 angeordnet sind. Dieser wird mit den Saugköpfen 22 auf die betreffende Querreihe 23 abgesenkt. Aufgrund gesteuerter Zuführung von Saugluft wird lediglich der fehlerhafte Becher 11 erfasst, angehoben und auf dem Förderer 40 abgesetzt.

Die dadurch entstehende Lücke wird nachfolgend im Bereich eines weiteren quergerichteten Füllförderers 78 aufgefüllt. Dieser ist in gleicher bzw. analoger Weise ausgebildet wie der Förderer 40. Auf diesem wird eine Anzahl bzw. Reihe von geprüften, dichten Bechern 11 bereitgehalten. Durch gesteuerte Beaufschlagung der Saugköpfe 22 wird jeweils ein Becher 11 durch den Hubförderer 41 erfasst und im Bereich der Lücke auf dem Packungsförderer 14 abgesetzt.

Die Förderer 40, 78 können alternativ auch so ausgebildet sein, dass z. B. durch einen steuerbaren Ausleger jeweils einzelne Becher 11 zur Entnahme bzw. zum Auffüllen zugefördert werden.

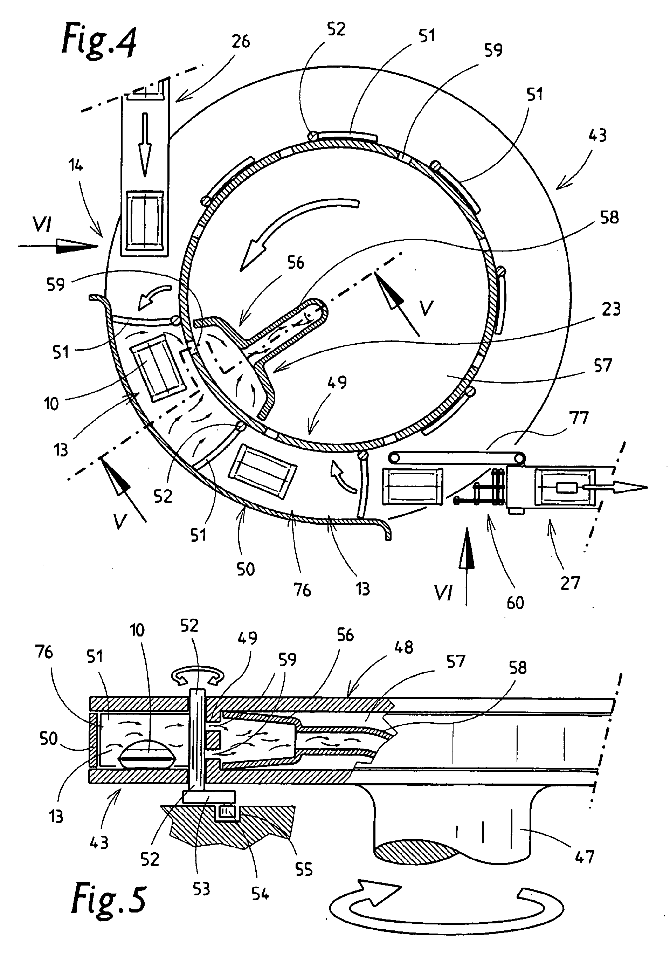

Bei dem Ausführungsbeispiel gemäß Fig. 4 und Fig. 5 ist der Packungsförderer 14 als (kontinuierlich) drehende Förderscheibe 43 ausgebildet. Die Packungen, nämlich Beutel 10, werden durch den Vorförderer 26 auf einen streifen- bzw. ringföreigen Randbereich der Förderscheibe 43 transportiert und dort abgelegt, sodass die Beutel 10 mit Umfangsabstand voneinander längs eines bogenförmigen Förderabschnitts - im vorliegenden Falle etwas geringer als ein Halbkreis - transportiert werden. Der Vorförderer 26 ist als Gurtförderer ausgebildet mit einer Anzahl von Stützrollen 44 unterhalb eines oberen Fördertrums 45. Dieser ist schräg abwärts gerichtet auf die Förderscheibe 43. Ein Umlenkteil 46 des Vorförderers 26 ist keilförmig, scharfkantig auslaufend gestaltet, sodass die Beutel 10 störungsfrei auf der Förderscheibe 43 abgelegt werden. Diese ist durch eine aufrechte Welle 47 antreibbar.

Ein bogenförmiger Teilbereich der Förderstrecke der Beutel 10 ist als geschlossener (bogenförmiger) Prüfkanal 76 ausgebildet. Dieser ist oben durch eine Gegenscheibe 48 begrenzt, die mit der Förderscheibe 43 eine (drehende) Einheit bildet. Radial innenliegend befindet sich eine ringsherumlaufende, kreisförmige Innenwand 49 als (aufrechte) Begrenzung des Förder- bzw. Prüfkanals 76. Außen ist dieser durch ein ortsfestes bzw. feststehendes Leitblech 50 begrenzt. Dieses folgt der Kontur der Förderscheibe 43 und ist zwischen Außenrändern der Förderscheibe 43 und Gegenscheibe 48 positioniert. Die Innenwand 49 ist zugleich Verbindung der Förderscheibe 43 mit der Gegenscheibe 48.

Im Bereich des so ausgebildeten Prüfkanals 76 werden geschlossene Prüfkammern 13 durch quer bzw. annähernd radial gerichtete Trennorgane gebildet, nämlich klappenförmige Trennwände 51. Diese liegen in Ausgangsstellung außerhalb des Querschnitts des Prüfkanals, nämlich an der Innenwand 49 an. Für eine formschlüssige, exakte Anlage sind die Trennwände 51 entsprechend gewölbt. Jede Trennwand 51 ist schwenkbar, und zwar durch Anbringung an einer aufrechten Schwenkwelle 52. Diese wird in der einen und anderen Richtung gedreht, nämlich aus einer Ausgangsstellung der Trennwand 51 an der Innenwand 49 in eine quergerichtete, aktive Trennstellung. Zu diesem Zweck ist jede Schwenkwelle 52 mit einem Getriebe außerhalb des Prüfkanals 76 verbunden, im vorliegenden Falle mit einem Schwenkarm 53, der durch eine Kurvenrolle 54 in einer ringsherumlaufenden ortsfesten Kurvenbahn 55 hinsichtlich der Schwenkbewegungen bewegt wird.

Nach Ablage eines Beutels 10 auf der Förderscheibe 43 wird im Anschluss an den Beutel 10 die betreffende Trennwand 51 in die Trenn- bzw. Dichtstellung geschwenkt, nämlich unter Ausfüllung des Querschnitts des Prüfkanals 76. Mit den vor und hinter dem Beutel 10 positionierten Trennwänden 51 und den übrigen Wandteilen wird eine ringsherum geschlossene Prüfkammer 13 gebildet. Diese wird durch ein ortsfestes Saugaggregat 23 mit Unterdruck beaufschlagt.

Das Saugaggregat 23 ist als Saugglocke 56 ausgebildet und in einem zwischen den Scheiben 43, 48 gebildeten und von der Innenwand 49 begrenzten Innenraum 57 angeordnet. An die Saugglocke 56 schließt ein radial gerichtetes Saugrohr 58 an, welches an eine zentrale Unterdruckquelle angeschlossen ist.

Die (aufrechte) Innenwand 49 weist luftdurchlässige Bereich auf, im vorliegenden Falle Saugbohrungen 59, die bei der Drehung der Einheit an der offenen Seite der Saugglocke 56 vorbeibewegt werden. Mindestens eine Saugbohrung 59 ist einer Prüfkammer 13 zugeordnet, sodass während der Bewegung der Saugbohrungen 59 im Bereich der Saugglocke 56 Unterdruck in der Prüfkammer 13 erzeugt wird.

Am Ende des Förder- bzw. Prüfkanals wird die in Förderrichtung jeweils vor einem Beutel 10 positionierte Trennwand 51 in die Ausgangsstellung zurückbewegt. Der geprüfte Beutel 10 wird nun durch einen Seitenförderer 77 von der Förderscheibe 43 abgelenkt auf einen Abförderer 27. Der Bereich zwischen Förderscheibe 43 und Abförderer 27 ist durch einen Brückenförderer 60 ausgefüllt.

Die Abtastung der geprüften Packungen bzw. Beutel 10 erfolgt auch hier im Bereich des Abförderers 27 durch einen Sensor 28.

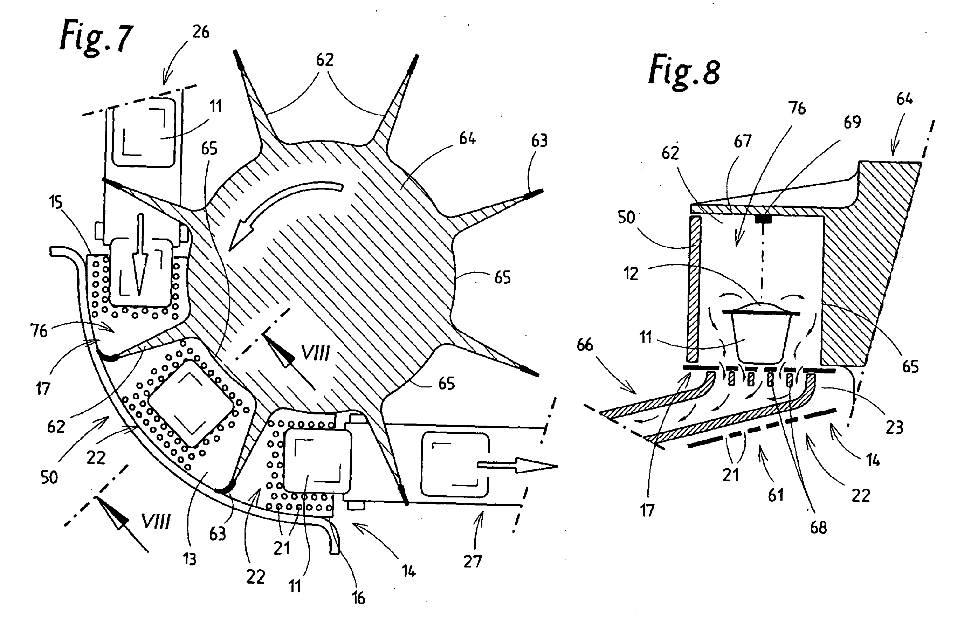

Auch bei dem Ausführungsbeispiel gemäß Fig. 7 und Fig. 8 werden die Packungen nämlich Becher 11, entlang einer kreisbogenförmigen Prüfstrecke in einem geschlossenen Prüfkanal 76 transportiert. Dieser ist annähernd viertelkreisförmig bemessen. Die Becher 11 werden zu diesem Zweck auf einer teilkreisförmigen Unterlage abgesetzt, nämlich einem als Gurtförderer ausgebildeten Packungsförderer 14. Dieser ist in grundsätzliche bekannter Weise so ausgebildet, dass der Fördertrum 17 eine kreisbogenförmige Kontur, annähernd viertelkreisförmig, aufweist. Ein Untertrum 61 verläuft teilweise in einer schräg gerichteten Eben (Fig. 8).

Die Packungen bzw. Becher 11 werden auf dem Vorförderer 26 mit Abstand voneinander transportiert und auf dem Fördertrum 17 des Packungsförderers 14 abgesetzt. Im Bereich des Prüfkanals 76, nämlich auf dem Packungsförderer 14, werden die Becher 11 in Prüfkammern 13 eingeführt. Diese werden auch hier von feststehenden und mitlaufenden Begrenzungen gebildet. Eine Außenführung, nämlich ein Leitblech 50, ist ortsfest angeordnet, der kreisbogenförmigen Kontur des Packungsförderers 14 folgend. Oberhalb des Fördertrums 17 des Packungsförderers 14 sind in Abständen voneinander radial gerichtete Stege als Querwände 62 eingesetzt. Diese sind in gleichmäßigen Abständen voneinander angeordnet und liegen im Bereich des Leitblechs 50 dichtend an diesem an. An den Enden der keilförmig ausgebildeten Querwände 62 sind zu diesem Zweck elastische Dichtungsstreifen 63 angeordnet, die während der Bewegung der Querwände 62 gleitend an dem Leitblech 50 anliegen.

Die Querwände 62 sind als radial abstehende Stege eines Drehkörpers 64 ausgebildet. Dieser erstreckt sich über die Höhe des zu bildenden Prüfkanals 76. Eine kreisbogenförmige Innenfläche 65 des Drehkörpers 64 bildet die Innenbegrenzung der Prüfkammern 13. Als oberer Abschluss ist eine Oberwand 67 vorgesehen, die ortsfest angeordnet sein kann, im vorliegenden Fall aber als ringsherumlaufender Teil des Drehkörpers 64 ausgebildet ist. Als Außenbegrenzung ist ein ortsfest angeordnetes Leitblech 50 vorgesehen, welches viertelkreisförmig der Kontur des Packungsförderers 14 im Bereich des Fördertrums 17 folgt. Bei dem gezeigten Beispiel (Fig. 8) ist das Leitblech 50 zwischen der Oberwand 67 und dem Fördertrum 17 angeordnet.

Der Prüfkanal 76 ist demnach annähernd viertelkreisförmig ausgebildet. Die an dem Drehkörper 64 angeordneten Querwände 62 durchlaufen den Prüfkanal 76 unter Bildung jeweils einer Prüfkammer 13. Die Bewegungen sind so aufeinander abgestimmt, dass die Querwände 62 im Bereich des Vorförderers 76 in den Zwischenraum zwischen aufeinanderfolgenden Packungen bzw. Bechern 11 eintreten und sodann in dieser Relativstellung durch den Prüfkanal 76 hindurchwandern.

Der Gurt des Packungsförderers 14 ist - ähnlich wie bei dem Ausführungsbeispiel der Fig. 1 - mit Gruppen von Saugbohrungen 21 zur Bildung von Saugbereichen 22 versehen. Die Becher 11 werden auf den Saugbereichen 22 positioniert. Der Unterdruck in der jeweiligen Prüfkammer 13 wird durch ein Saugaggregat 23 erzeugt, welches hier aus einem Saugkanal 66 unterhalb des Fördertrums 17 besteht. Dieser Saugkanal 66 mündet etwa im mittleren Bereich des Prüfkanals 76 an der Unterseite des Fördertrums 17, sodass Unterdruck in der Prüfkammer 13 entsteht. Der Saugkanal 66 ist mit Stützrippen 68 in einer Ebene unterhalb des Fördertrums 17 versehen zur Abstützung desselben während der Übertragung der Saugluft.

Die Kontrolle der geprüften Becher 11, nämlich die Abtastung der Oberseite bzw. der Verschlussfolie 12, erfolgt hier unmittelbar im Bereich jeder Prüfkammer 13. An der Unterseite der Oberwand 67 sind jeweils Sensoren 69 angebracht, die mit dem Drehkörper 64 bzw. der Oberwand 67 umlaufen. Die geprüften Packungen bzw. Becher 11 werden von dem Packungsförderer 14 an der Austrittseite des Prüfkanals 76 unmittelbar an den Abförderer 27 übergeben.

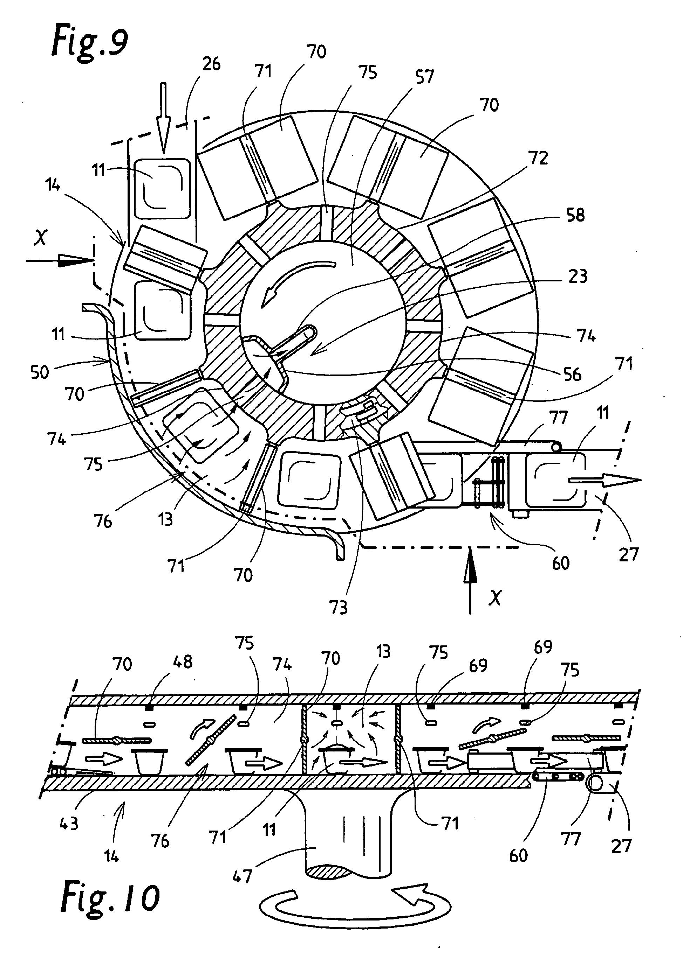

Fig. 9 und Fig. 10 zeigen ein Ausführungsbeispiel, bei dem analog zum Ausführungsbeispiel gemäß Fig. 4, Fig. 5 Prüfkammern 13 im Prüfkanal durch bewegbare, nämlich schwenkbare Zwischenwände 70 gebildet sind. Die Besonderheit besteht darin, dass die flügelartigen Zwischenwände 70 an einem mittig angeordneten, horizontalen Drehzapfen 71 angebracht sind. Dieser ist in einem entsprechend dickwandig bemessenen, drehenden Tragkörper 72 gelagert, der funktionell mit der Innenwand 49 vergleichbar ist.

Innerhalb des Tragkörpers 72 ist ein ringförmiger Führungskanal 73 gebildet. Dieser nimmt die Organe zur Bewegung der Zwischenwände 70 während der Drehung des Tragkörpers 72 auf. Ein am Ende des Drehzapfens 71 angeordneter Schwenkarm weist eine Tastrolle auf, die auf einer Kurvenbahn abläuft. Die Bewegung der Zwischenwände 70 wird so gesteuert, dass im Bereich des Vorförderers 26 eine zwischen aufeinanderfolgenden Packungen bzw. Bechern 11 befindliche Zwischenwand 70 aus der horizontalen Ausgangsstellung während der Bewegung des Tragkörpers 72 um 90° in die aufrechte Stellung gedreht wird. Die horizontal gerichteten Drehzapfen 71 sind aufgrund entsprechender Abmessungen in einer (horizontalen) Ebene oberhalb der zu prüfenden Packungen angeordnet.

Jede Prüfkammer 13 ist durch eine untere Trag- bzw. Förderscheibe 43, eine obere Gegenscheibe 48, durch eine Umfangsfläche 74 des Tragkörpers 72, durch die äußere Führung, nämlich das Leitblech 50 und durch zwei aufeinanderfolgende Zwischenwände 70 begrenzt ist. Der erforderliche Unterdruck wird durch ein Saugaggregat 23 erzeugt, welches in gleicher oder ähnlicher Weise ausgebildet ist wie bei dem Ausführungsbeispiel der Fig. 4, Fig. 5 und über Saugkanäle 75 in dem Tragkörper 72 mit der Prüfkammer 13 verbunden ist.

Die Sensoren 69 sind bei diesem Ausführungsbeispiel jeder Prüfkammer 13 unmittelbar zugeordnet und zu diesem Zweck an einem bewegbaren Teil angebracht, nämlich hier an der oberen Gegenscheibe 48. Eine weitere Alternative ist dahingehend möglich, dass Sensoren eingesetzt werden, die auf andere physikalische oder chemische Veränderungen reagieren. So können die Sensoren als Geruchssensoren ausgebildet sein, die infolge des Unterdrucks austretende Geruchspartikel des Inhalts der Packungen erkennen.

### Bezugszeichenliste

- 10: Beutel
- 11: Becher
- 12: Verschlussfolie
- 13: Prüfkammer
- 14: Packungsförderer
- 15: Umlenkwalze
- 16: Umlenkwalze
- 17: Fördertrum
- 18: Prüfgruppe
- 19: Abdeckhaube
- 20: Zuförderer
- 21: Hubförderer
- 22: Saugkopf
- 23: Querreihe
- 24: Oberwand
- 25: Seitenwand
- 26: Quersteg
- 27: Platte
- 28: Sensor
- 29: Haubenförderer
- 30: Fuge
- 31: Saugrohr
- 32: Schlauch
- 33: Unterdruckquelle
- 34: Schlitten
- 35: Linearantrieb
- 36: Servomotor
- 37: Linie
- 38: Abförderer
- 39: Hubförderer
- 40: Förderer
- 41: Hubförderer
- 42: Tragarm
- 43: Förderscheibe
- 44: Stützrollen
- 45: Fördertrum
- 46: Umlenkteil
- 47: Welle
- 48: Gegenscheibe
- 49: Innenwand
- 50: Leitblech
- 51: Trennwand
- 52: Schwenkwelle
- 53: Schwenkarm
- 54: Kurvenrolle
- 55: Kurvenbahn
- 56: Saugglocke
- 57: Innenraum
- 58: Saugrohr
- 59: Saugbohrung
- 60: Brückenförderer
- 61: Untertrum
- 62: Querwand
- 63: Dichtungsstreifen
- 64: Drehkörper
- 65: Innenfläche
- 66: Saugkanal
- 67: Oberwand
- 68: Stützrippe
- 69: Sensor
- 70: Zwischenwand
- 71: Drehzapfen
- 72: Tragkörper
- 73: Führungskanal
- 74: Umfangsfläche
- 75: Saugkanal
- 76: Prüfkanal
- 77: Seitenförderer
- 78: Füllförderer

## Patentansprüche

1. Verfahren zur Prüfung der Dichtigkeit von als geschlossene Hohlkörper mit Luft innerhalb derselben ausgebildeten Gegenständen, insbesondere von geschlossenen Packungen, wie Folienbeuteln (10), Becherpackungen (11) mit Verschlussfolie etc., mittels Unterdruck, wobei die Gegenstände bzw. Packungen (10, 11) kontinuierlich entlang einer Förderstrecke transportiert werden, und wobei während eines Transportabschnitts die Gegenstände bzw. Packungen (10, 11) in einer mit den Packung (10, 11) bzw. mit einer zu prüfenden Gruppe derselben mitlaufenden Prüfkammer (13) aufgenommen werden, und wobei die Prüfkammer (13) im Bereich einer definierten Prüfstrecke oder Prüfstation mit Unterdruck beaufschlagt wird, und wobei die Prüfkammer (13) allseitig abgedichtet ist, insbesondere in Verbindung mit einem Packungsförderer (14), und wobei etwaige Verformungen des Gegenstands bzw. der Packung (10, 11) in der Prüfkammer (13) und/oder nach Verlassen derselben abgetastet werden, **dadurch gekennzeichnet, dass** der als Plattenförderer ausgebildete Packungsförderer (14) formstabile Platten (27) aufweist, die eine durchgehende Plattenebene als Auflager für die Gegenstände und das Abdichtorgan, nämlich eine Abdeckhaube (19), bilden und wobei das Abdichtorgan zum Abdichten so auf dem Packungsförderer (14) positioniert wird, dass quergerichtete Seitenwände (25) und Querstege (26) des Abdichtorgans im Bereich von Fugen (30) zwischen den Platten (27) auf dem Packungsförderer (14) aufliegen zur Abdichtung der Fugen (30).

2. Verfahren nach Anspruch 1, **gekennzeichnet durch** folgende Merkmale:
a) eine formierte Gruppe von Gegenständen bzw. Packungen (10, 11), nämlich eine Prüfgruppe (18) aus Längsreihen und Querreihen (23) von Gegenständen bzw. Packungen (11) wird gleichzeitig während des Transports in der Prüfkammer (13) überprüft,
b) jeder Gegenstand bzw. jede Packung (10, 11) wird **durch** ein zugeordnetes Prüforgan bzw. einen Sensor (28) überprüft,
c) fehlerhafte bzw. undichte Gegenstände bzw. Packungen (10, 11) werden identifiziert und aus der Prüfgruppe (18) ausgesondert,
e) an die Stelle des ausgesonderten, fehlerhaften Gegenstands bzw. der Packung (10, 11) wird eine intakte, dichte Packung (10, 11) an derselben Position innerhalb der Prüfgruppe (18) positioniert.

3. Vorrichtung zum Prüfen der Dichtigkeit von als geschlossene Hohlkörper mit Luft innerhalb derselben ausgebildeten Gegenständen, insbesondere von Packungen, wie Folienbeutel (10), Becherpackungen (11) mit Verschlussfolie (12) etc., in einer mit Unterdruck beaufschlagten Prüfkammer (13), wobei die Packungen (10, 11) während des kontinuierlichen Transports in der mit den Packungen (10, 11) in Transportrichtung mitlaufenden Prüfkammer (13) mit Unterdruck beaufschlagt sind, und wobei die Packungen (10, 11) auf einem Packungsförderer (14) angeordnet und durch diesen entlang einer Prüfstrecke bzw. durch eine Prüfstation hindurchbewegbar sind, und wobei im Bereich der Prüfstrecke oder Prüfstation mindestens ein Abdichtorgan in Prüfstellung bewegbar ist, welches in Verbindung mit dem Packungsförderer (14) und/oder weiteren Begrenzungen die geschlossene Prüfkammer (13) bildet und wobei die Prüfkammer (13) zeitweilig, nämlich im Bereich der Prüfstrecke oder Prüfstation, mit Unterdruck beaufschlagt ist und wobei die Packungen (10, 11) innerhalb der Prüfkammer (13) oder nach Verlassen derselben durch Sensoren (28) hinsichtlich der korrekten Ausbildung überprüfbar sind, **dadurch gekennzeichnet, dass** der Packungsförderer (14) als Plattenförderer ausgebildet ist, mit formstabilen Platten (27), die eine durchgehende Plattenebene als Auflager für die Gegenstände und das Abdichtorgan, nämlich eine Abdeckhaube (19), bilden und wobei das Abdichtorgan so auf dem Packungsförderer (14) positionierbar ist, dass quergerichtete Seitenwände (25) und Querstege (26) des Abdichtorgans im Bereich von Fugen (30) zwischen den Platten (27) auf dem Packungsförderer (14) aufliegen zur Abdichtung der Fugen (30).

4. Vorrichtung nach Anspruch 3, **dadurch gekennzeichnet, dass** die Prüfkammer (13) durch den Packungsförderer (14) einerseits und die auf den Packungsförderer (14) dichtend aufsetzbaren Abdeckhaube (18) begrenzt ist, wobei die Abdeckhaube (18) an eine Unterdruckquelle (33) angeschlossen ist, vorzugsweise über eine Saugleitung (32) bzw. ein Saugrohr (31).

5. Vorrichtung nach Anspruch 3 oder einem der weiteren Ansprüche, **dadurch gekennzeichnet, dass** die Abdeckhaube (18) durch einen Haubenförderer (29) auf- und abbewegbar sowie in Bewegungsrichtung des Packungsförderers (14) hin- und herbewegbar ist.

6. Vorrichtung nach Anspruch 5 oder einem der weiteren Ansprüche, **dadurch gekennzeichnet, dass** die Abdeckhaube (18) insbesondere mit einem aufrechten, auf- und abbewegbaren Saugrohr (31) an einem parallel zum Packungsförderer (14) verlaufenden Linearantrieb (35) angebracht ist, insbesondere mittels Schlitten (34) an einer horizontalen Servoachse.

7. Vorrichtung nach Anspruch 4 oder einem der weiteren Ansprüche, **dadurch gekennzeichnet, dass** jede Packung (10, 11) hinsichtlich einer Formänderung im Bereich der Prüfkammer (13) erfassbar ist, insbesondere durch außerhalb der Abdeckhaube (18) angeordnete Sensoren (28), vorzugsweise nach dem Triangularprinzip arbeitende Lasersensoren, die oberhalb einer lichtdurchlässigen bzw. klarsichtigen Oberwand (24) der Abdeckhaube (18) entsprechend der Formation der Packungen (10, 11) angeordnet sind.

8. Vorrichtung nach Anspruch 4 oder einem der weiteren Ansprüche, **dadurch gekennzeichnet, dass** als fehlerhaft identifizierte Packungen (10, 11) außerhalb des Bereichs der Prüfkammer (13) durch einen Förderer, insbesondere Hubförderer (41) aus der Formation der Prüfgruppe (18) abförderbar und durch eine korrekte, intakte Packung (10, 11) mittels Füllförderer (78) ersetzbar ist.

9. Vorrichtung nach Anspruch 4 oder einem der weiteren Ansprüche, **dadurch gekennzeichnet, dass** ein die Prüfkammer (13) begrenzendes Organ, insbesondere der Packungsförderer (14) und/oder eine Seitenbegrenzung mit der Fördergeschwindigkeit der zu prüfenden Packungen (10, 11) bewegbar ist und je einer Packung (10, 11) zugeordnete luftdurchlässige Saugbereiche (22) aufweist, die an wenigstens einem vorzugsweise ortsfest angeordneten Saugaggregat (23) vorbeibewegbar sind zur Erzeugung eines zeitweiligen Unterdrucks in der Prüfkammer (13).

## Claims

1. A method for testing the integrity of objects formed as closed hollow bodies, in particular closed packages such as film bags (10), cup packages (11) with a closure film, etc., having air inside the same by means of vacuum, the objects or packages (10, 11) being transported continuously along a conveying path, and, during a transport section, the objects or packages (10, 11) being accommodated in a testing chamber (13) running along with the packages (10, 11) or with a group of the same to be tested, and the testing chamber (13) having a vacuum applied to it in the region of a defined testing section or testing station, and the testing chamber (13) being sealed off on all sides, in particular in conjunction with a package conveyor (14), and any deformations of the object or of the package (10, 11) being scanned in the testing chamber (13) and/or after leaving the same, **characterized in that** the package conveyor (14), configured as a plate conveyor, has dimensionally stable plates (27), which form a continuous plate plane as a support for the objects and the sealing element, namely a covering hood (19), and the sealing element for sealing being positioned on the package conveyor (14) in such a manner that transversely oriented side walls (25) and transverse webs (26) of the sealing element rest on the package conveyor (14) in the region of joints (30) between the plates (27) for sealing off the joints (30).

2. The method as claimed in claim 1, **characterized by** the following features:
a) a formed group of objects or packages (10, 11), namely a testing group (18) comprising longitudinal rows and transverse rows (23) of objects or packages (11) is checked simultaneously in the testing chamber (13) during transport,
b) each object or each package (10, 11) is checked by an associated testing element or a sensor (28),
c) faulty or non-sealed objects or packages (10, 11) are identified and separated out of the testing group (18),
e) in the place of the faulty object or the package (10, 11) separated out, an intact, sealed pack (10, 11) is positioned at the same position within the testing group (18).

3. A device for testing the integrity of objects formed as closed hollow bodies, in particular closed packages such as film bags (10), cup packages (11) with a closure film (12), etc., having air inside the same in a testing chamber (13) having a vacuum applied to it, the packages (10, 11) having a vacuum applied to them during their continuous transport in the testing chamber (13) running along with the packages (10, 11) in the direction of transport, and the packages (10, 11) being arranged on a package conveyor (14) and transportable by the latter along a testing section or through a testing station, and in the region of the testing section or testing station, it being possible to move into a testing position at least one sealing element which, in conjunction with the package conveyor (14) and/or further limits, forms the closed testing chamber (13), the testing chamber (13) having a vacuum applied to it for some time, specifically in the region of the testing section or testing station, and it being possible to check the packages (10, 11), either within the testing chamber (13) or after leaving the same, by sensors (28) with respect to correct formation, **characterized in that** the package conveyor (14) is configured as a plate conveyor with dimensionally stable plates (27), which form a continuous plate plane as a support for the objects and the sealing element, namely a covering hood (19), and it being possible to position the sealing element on the package conveyor (14) in such a manner that transversely oriented side walls (25) and transverse webs (26) of the sealing element rest on the package conveyor (14) in the region of joints (30) between the plates (27) for sealing off the joints (30).

4. The device as claimed in claim 3, **characterized in that** the testing chamber (13) is delimited by the package conveyor (14), on one hand, and the covering hood (18) which can be placed on the package conveyor (14) in a sealing manner, the covering hood (18) being connected to a vacuum source (33), preferably via a suction line (32) or a suction pipe (31).

5. The device as claimed in claim 3 or one of the further claims, **characterized in that** the covering hood (18) can be moved up and down by a hood conveyor (29) and can also be moved to and fro in the direction of movement of the package conveyor (14).

6. The device as claimed in claim 5 or one of the further claims, **characterized in that** the covering hood (18) is in particular fitted with an upright suction pipe (31) which can be moved up and down on a linear drive (35) running parallel to the package conveyor (14), in particular by means of a carriage (34) on a horizontal servo axle.

7. The device as claimed in claim 4 or one of the further claims, **characterized in that** each package (10, 11) can be registered with respect to a shape change in the region of the testing chamber (13), in particular by means of sensors (28) arranged outside the covering hood (18), preferably laser sensors operating in accordance with the triangulation principle, which are arranged above a translucent or clear-view upper wall (24) of the covering hood (18) corresponding to the formation of the packages (10, 11).

8. The device as claimed in claim 4 or one of the further claims, **characterized in that**, outside the region of the testing chamber (13), packages (10, 11) identified as faulty can be conveyed away from the formation of the testing group (18) by a conveyor, in particular a lifting conveyor (41), and can be replaced by a correct, intact package (10, 11) by means of a filling conveyor (78).

9. The device as claimed in claim 4 or one of the further claims, **characterized in that** an element delimiting the testing chamber (13), in particular the package conveyor (14) and/or a lateral limit, can be moved at the conveying speed of the packages (10, 11) to be tested and has air-permeable suction regions (22) which are each assigned to a package (10, 11) and can be moved past at least one suction unit (23), preferably arranged in a fixed location, in order to produce a temporary vacuum in the testing chamber (13).

## Revendications

1. Procédé pour contrôler l'étanchéité d'objets réalisés sous forme de corps creux fermés remplis d'air, notamment d'emballages fermés, comme des sachets en film (10), des emballages en forme de tasse (11) avec un film de fermeture, etc., au moyen d'une dépression, les objets ou les emballages (10, 11) étant transportés en continu le long d'une voie de transport et pendant une section du transport, les objets ou les emballages (10, 11) étant reçus dans une chambre de contrôle (13) entraînée en même temps que l'emballage (10, 11) ou un groupe de ceux-ci à contrôler, la chambre de contrôle (13) étant sollicitée avec une dépression dans la région d'une voie de contrôle définie ou d'un poste de contrôle et la chambre de contrôle (13) étant rendue étanche de tous les côtés, notamment en association avec une bande transporteuse d'emballages (14), et des déformations éventuelles de l'objet ou de l'emballage (10, 11) étant détectées dans la chambre de contrôle (13) et/ou à la sortie de celle-ci, **caractérisé en ce que** la bande transporteuse d'emballages (14) réalisée sous forme de bande transporteuse à plaques présente des plaques de forme stable (27) qui forment un plan de plaques continu servant d'appui pour les objets et l'organe d'étanchéité, à savoir un capot de recouvrement (19) et l'organe d'étanchéité pour réaliser l'étanchéité étant positionné sur la bande transporteuse d'emballages (14) de telle sorte que des parois latérales orientées transversalement (25) et des nervures transversales (26) de l'organe d'étanchéité s'appliquent dans la région de joints (30) entre les plaques (27) sur la bande transporteuse d'emballages (14) en vue d'étancher les joints (30).

2. Procédé selon la revendication 1, **caractérisé par** les caractéristiques suivantes :
a) un groupe d'objets ou d'emballages formé (10, 11), à savoir un groupe de contrôle (18) constitué de rangées longitudinales et de rangées transversales (23) d'objets ou d'emballages (11) est contrôlé simultanément pendant le transport dans la chambre de contrôle (13),
b) chaque objet ou chaque emballage (10, 11) est contrôlé par un organe de contrôle ou un capteur (28) associé,
c) des objets ou emballages (10, 11) défectueux ou non étanches sont identifiés et séparés du groupe de contrôle (18),
e) à la place de l'objet ou de l'emballage défectueux séparé (10, 11), on positionne dans la même position à l'intérieur du groupe de contrôle (18) un emballage intact étanche (10, 11).

3. Dispositif pour contrôler l'étanchéité d'objets réalisés sous forme de corps creux fermés remplis d'air, notamment d'emballages, comme des sachets en film (10), des emballages en forme de tasse (11) avec un film de fermeture (12), etc., dans une chambre de contrôle (13) sollicitée avec une dépression, les emballages (10, 11) étant sollicités avec une dépression pendant le transport continu dans la chambre de contrôle (13) entraînée en même temps que les emballages (10, 11) dans la direction de transport, et les emballages (10, 11) étant disposés sur une bande transporteuse d'emballages (14) et pouvant être déplacés par celle-ci le long d'une section de contrôle ou à travers un poste de contrôle, et dans la région de la section de contrôle ou du poste de contrôle au moins un organe d'étanchéité pouvant être déplacé dans la position de contrôle, lequel forme en liaison avec la bande transporteuse d'emballages (14) et/ou d'autres limites, la chambre de contrôle fermée (13), et la chambre de contrôle (13) étant sollicitée temporairement, à savoir dans la région de la section de contrôle ou du poste de contrôle, avec une dépression et les emballages (10, 11) pouvant être contrôlés à l'intérieur de la chambre de contrôle (13) ou à la sortie de celle-ci par des capteurs (28) pour déterminer leur réalisation correcte, **caractérisé en ce que** la bande transporteuse d'emballages (14) est réalisée sous forme de bande transporteuse à plaques, avec des plaques de forme stable (27), qui forment un plan de plaques continu servant d'appui pour les objets et l'organe d'étanchéité, à savoir un capot de recouvrement (19) et l'organe d'étanchéité étant positionnable sur la bande transporteuse d'emballages (14) de telle sorte que des parois latérales orientées transversalement (25) et des nervures transversales (26) de l'organe d'étanchéité s'appliquent dans la région de joints (30) entre les plaques (27) sur la bande transporteuse d'emballages (14) en vue d'étancher les joints (30).

4. Dispositif selon la revendication 3, **caractérisé en ce que** la chambre de contrôle (13) est limitée d'une part par la bande transporteuse d'emballages (14) et par le capot de recouvrement (19) pouvant être posé de manière hermétique sur la bande transporteuse d'emballages (14), le capot de recouvrement (19) étant raccordé à une source de dépression (33), de préférence par le biais d'une conduite aspirante (32) ou d'un tube aspirant (31).

5. Dispositif selon la revendication 3 ou l'une quelconque des autres revendications, **caractérisé en ce que** le capot de recouvrement (19) peut être déplacé de haut en bas par un transporteur de capot (29), et peut également être déplacé d'avant en arrière dans la direction de déplacement de la bande transporteuse d'emballages (14).

6. Dispositif selon la revendication 5 ou l'une quelconque des autres revendications, **caractérisé en ce que** le capot de recouvrement (19) est monté notamment avec un tube aspirant (31) droit, déplaçable de haut en bas, sur un entraînement linéaire (35) s'étendant parallèlement à la bande transporteuse d'emballages (14), notamment au moyen de chariots (34) sur un axe de servocommande horizontal.

7. Dispositif selon la revendication 4 ou l'une quelconque des autres revendications, **caractérisé en ce que** chaque emballage (10, 11) peut être détecté pour contrôler une éventuelle modification de sa forme dans la région de la chambre de contrôle (13), notamment par des capteurs (28) disposés à l'extérieur du capot de recouvrement (19), de préférence des capteurs laser fonctionnant selon le principe triangulaire, qui sont disposés au-dessus d'une paroi supérieure (24) transparente ou translucide du capot de recouvrement (19) en fonction de la formation des emballages (10, 11).

8. Dispositif selon la revendication 4 ou l'une quelconque des autres revendications, **caractérisé en ce que** des emballages (10, 11) identifiés comme défectueux peuvent être évacués en dehors de la région de la chambre de contrôle (13) par un transporteur, notamment un chariot élévateur (41), hors de la formation du groupe de contrôle (18), et peuvent être remplacés par un emballage intact correct (10, 11) au moyen d'une bande transporteuse de remplissage (78).

9. Dispositif selon la revendication 4 ou l'une quelconque des autres revendications, **caractérisé en ce qu'**un organe limitant la chambre de contrôle (13), notamment la bande transporteuse d'emballages (14), et/ou une limite latérale, peuvent être déplacés à la vitesse de transport des emballages à contrôler (10, 11), et présentent à chaque fois des régions d'aspiration perméables à l'air (22) associées à chaque emballage (10, 11), qui peuvent être déplacées devant au moins une unité d'aspiration (23) disposée de préférence fixement, pour produire une dépression temporaire dans la chambre de contrôle (13).
